# EUROPÄISCHE PATENTSCHRIFT

(11) **EP 0 918 687 B1**
(45) Veröffentlichungstag und Bekanntmachung des Hinweises auf die Patenterteilung: **12.07.2000**
(21) Anmeldenummer: 97943805.8
(22) Anmeldetag: 12.08.1997
(51) Int. Cl.: B64F 1/26

(54) **LÄRMSCHUTZHALLE FÜR FLUGZEUGE**
SOUND PROOF HANGAR FOR AIRPLANES
HANGAR ANTIBRUIT POUR AVIONS

(30) Priorität: 13.08.1996 DE 29614036 U
(43) Veröffentlichungstag der Anmeldung: 02.06.1999
(73) Patentinhaber: G + H MONTAGE GMBH, 67059 Ludwigshafen (DE)
(72) Erfinder: MEYER, Thomas, J., D-22605 Hamburg (DE)
(74) Vertreter: Glawe, Delfs, Moll & Partner
(86) Internationale Anmeldenummer: EP9704419
(87) Internationale Veröffentlichungsnummer: WO9806625

(56) Entgegenhaltungen:
- FR-A- 1 439 385
- FR-A- 1 444 407
- GB-A- 1 089 630

## Beschreibung

Zur Abschirmung des Lärms von Flugzeugtriebwerken während des Probelaufs verwendet man Lärmschutzhallen, die im wesentlichen das ganze Flugzeug aufnehmen. Die Hallenöffnung läßt man häufig ganz offen, wobei die Halle so orientiert ist, daß sie die Abstrahlung zur bewohnten Seite hin abschirmt, während die Öffnung zur lärmtechnisch unsensiblen Seite hin gerichtet ist. Jedoch gibt es Fälle, in denen auch auf der Öffnungsseite schalldämpfende Maßnahmen getroffen werden müssen. Das bedeutet, daß die Öffnung ganz oder teilweise schließbar sein muß oder daß die Triebwerke als Schallquellen seitlich von den Wänden der Halle zur Öffnungsseite hin weit überragt werden müssen, damit der freie Schallabstrahlungswinkel klein genug ist. Bei einer bekannten Lärmschutzhalle (GB-1089630) mit weiter Einlaßöffnung für Flugzeuge sind die Lufteinlässe in den Seitenwänden der Halle angeordnet. Sie werden durch eine Vielzahl von senkrecht zur Seitenwand stehenden Rippen unterteilt, die der einströmenden Luft eine Strömungsrichtung quer zur Hallenlängsachse bzw. Triebwerkslängsachse aufzwingen. Dies hat große Nachteile für solche Triebwerke, die empfindlich auf ungleichmäßige Anströmung reagieren, beispielsweise solche, die mit einem Bypass versehen sind. Wenn sie, bedingt durch die in der Wand enthaltene Luftführung, ungleichmäßig angeströmt werden, können sie beschädigt und ggf. sogar zerstört werden. Eine Lärmschutzhalle gemäß dem Oberbegriff des Anspruchs 1 ist aus FR-A-1 439 385 bekannt. Eine harmschutzhalle gemäß dem Oberbegriff des Anspruchs 2 ist allgemein bekannt.

Der Erfindung liegt daher die Aufgabe zugrunde, eine öffnungsseitige Schallabschirmung zu schaffen, die auch bei Probeläufen anströmungsempfindlicher Triebwerke verwendbar ist. Die erfindungsgemäße Lösung besteht in den Merkmalen des Anspruchs 1 bzw. 2 und vorzugsweise denjenigen der Unteransprüche.

Demgemäß wird die Hallenöffnung in der Richtung oder den Richtungen, in denen eine Schallabschirmung erforderlich ist, durch jeweils eine Reihe von gekrümmten Leitflächen als Schalldämpfungskörper begrenzt, die zwischeneinander ins Halleninnere gerichtete Strömungswege einschließen und deren Innenrand im Horizontalschnitt ins Halleninnere gerichtet ist. Zumindest der größte Teil der Schallwellen, die von innen auf die Leitflächengruppe treffen, können nicht ohne wenigstens eine Reflexion nach außen dringen. Dies genügt in der Regel für eine hinreichende Abschirmung. Gleichzeitig lassen die Leitflächen aber eine Strömung zu, die in Längsrichtung und damit parallel zur Triebwerksrichtung in die Halle eintritt und die Einlaßöffnungen der Triebwerke ohne wesentliche Wirbelbildung erreichen kann.

Es sind zwar Lärmschutzhallen bekannt (FR-A-1439385, FR-A-1444407), bei denen der Lufteinlaß durch die als Schalldämpfungskörper ausgeführten Einlaßtore erfolgt, jedoch sind innerhalb der als Schalldämpfer ausgebildeten Einlaßtore viele Kanten oder Knickstellen angeordnet, die eine Verwirbelung der zu den Triebwerken geleiteten Luft mit den nachteiligen Folgen für anströmungsempfindliche Triebwerke bewirken. Eine Krümmung der Leitkörper ist nicht vorgesehen.

Es kann zweckmäßig sein, die Leitflächen beweglich vorzusehen, um mit ihrer Hilfe die Hallenöffnung ganz oder teilweise schließen bzw. freigeben zu können. Beispielsweise können sie zu einer gemeinsam bewegbaren Einheit zusammengefaßt werden. Für einen solchen Leitflächenblock können ein gemeinsames Fahrwerk und im Flur entsprechende Schienen vorgesehen sein, die es gestatten, den Block zwischen der Öffnungs- und Schließposition zu bewegen. Jedoch kann es auch Fälle geben, in denen die Leitflächen des Blechs jeweils einzeln bewegbar sind oder einzeln oder in ihrer Gesamtheit verschwenkt werden können.

In den meisten Fällen genügt es, lediglich am Öffnungsrand eine zusätzliche Abschirmung in der erfindungsgemäßen Weise vorzunehmen. Die Leitflächen bzw. Leitflächengruppen schließen dann jeweils an einen Öffnungsrand an. Jedoch besteht auch die Möglichkeit, die gesamte Öffnung in der erfindungsgemäßen Weise zu schließen.

Schließlich ist es möglich, alle Leitflächen oder diejenigen von ihnen, die der Wandkante nahe angeordnet sind, stationär vorzusehen, wobei ihre Anordnung so getroffen ist, daß sie die volle Öffnungsweite nicht einengen.

Die Erfindung wird im folgenden näher unter Bezugnahme auf die Zeichnung erläutert, die ein vorteilhaftes Ausführungsbeispiel veranschaulicht.
- Fig. 1: zeigt einen schematischen Gesamtgrundriß einer Lärmschutzhalle,
- Fig. 2: einen Teil in größerem Maßstab, und
- Fig. 3 und 4: Teildarstellungen von weiteren Ausführungsformen.

Die Lärmschutzhalle 1 mit Seitenwänden 2 hat eine Öffnung 3, die von den Rändern 4 der Seitenwände 2, der Vorderkante 5, 6 des Dachs und dem Flur begrenzt wird. Sie erstreckt sich über die gesamte Breite der Halle, um beispielsweise einem modernen Verkehrsflugzeug 7 hinreichende Einlaßbreite zu geben. Der offene Schallabstrahlungswinkel dieser Öffnung beträgt im dargestellten Beispiel, bezogen auf jedes einzelne Triebwerk 8, mehr als 100°.

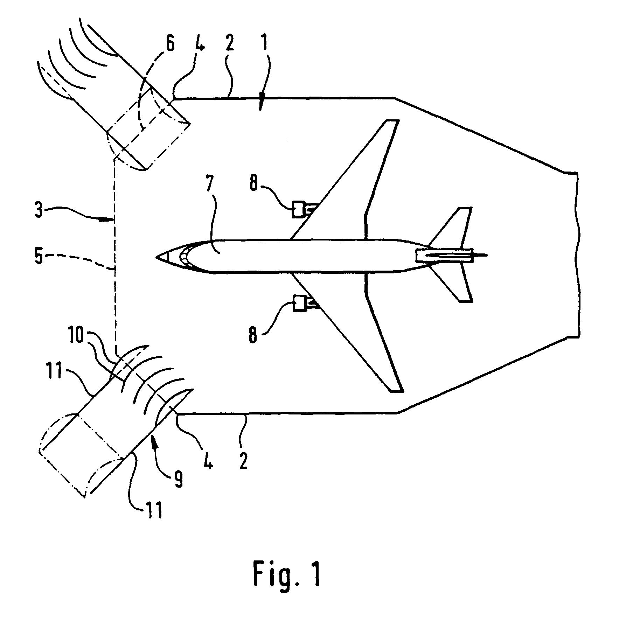

Dieser Öffnungswinkel wird erfindungsgemäß dadurch verkleinert, daß in den Randbereichen der Öffnung 3, anschließend an die Ränder 4 der Seitenwände 2, jeweils ein Block 9 von Leitflächen 10 vorgesehen wird, der auf Schienen 11 zwischen einer Schließstellung und einer Öffnungsstellung beweglich ist. In Fig.1 ist er oben in Öffnungsstellung und unten in Schließstellung mit durchgezogenen Linien gezeigt, während die andere Extremstellung jeweils in strichpunktierten Linien angegeben ist. In der Öffnungsstellung ist der Abstand zwischen den beiden Abschirmblöcken 9 mindestens ebenso groß wie die Öffnungsbreite der Halle. In der Schließposition schließt sich jeder Block an die zugehörige Wandkante 4 an. Jede Leitfläche erstreckt sich vorzugsweise vertikal zwischen dem Dachrand 6 und dem Flur.

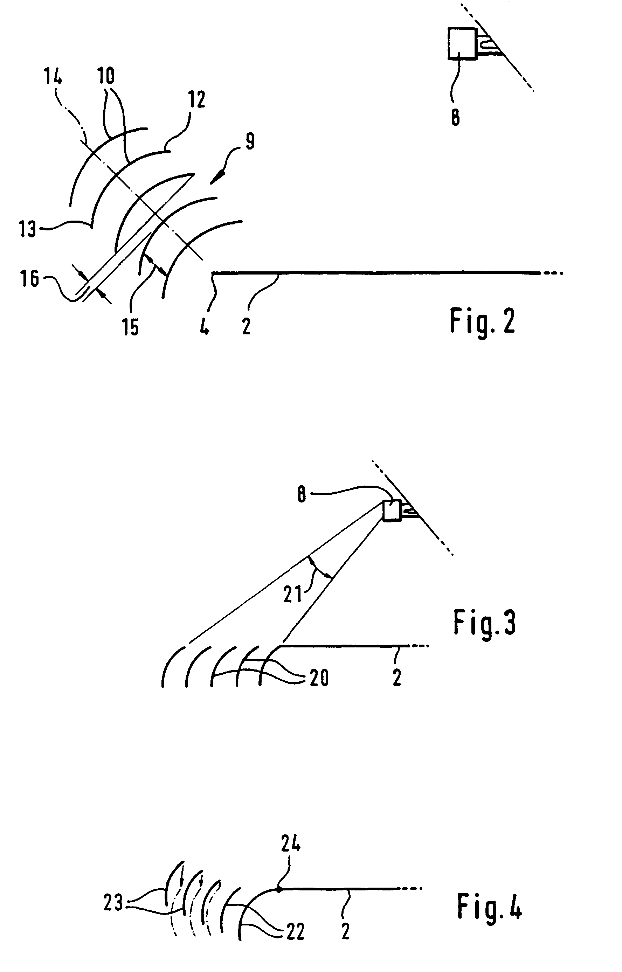

Die Leitflächen 10 sind vorzugsweise im Horizontalabschnitt längs eines Kreisbogens gekrümmt und parallel zueinander angeordnet, wobei sie an ihren inneren Enden 12 parallel zur Hallenlängsrichtung bzw. parallel zur Richtung der Seitenwände 2 verlaufen, während ihre äußeren Ränder 13 quer dazu von der Hallenmittellinie weg zur Seite hin gerichtet sind. Ihre Mittellinie 14 verläuft unter 45° zur Hallenlängsrichtung. Ihr Abstand 15 ist so gewählt, daß sich der jeweils notwendige Schall-Abschirmeffekt ergibt. Im Idealfall erlauben sie keinen Durchblick lotrecht zu ihrer Mittellinie 14; d.h. der Abstand 16 zwischen der Verbindungslinie ihrer Enden und der nächstbenachbarten Leitfläche ist Null. Jedoch ist dies keineswegs immer erforderlich. Auch wenn die Abstandsverhältnisse so gewählt sind, wie dies in Fig.2 angedeutet ist, kann sich, bezogen auf die Position eines Triebwerks 8, ein hinreichender Abschirmeffekt ergeben.

Die Leitflächen 10 sind zweckmäßigerweise schallschluckend ausgeführt. Der Leitflächenblock ist ferner zweckmäßigerweise an seinem oberen und unteren Ende durch jeweils eine horizontale Deckfläche geschlossen. Jedoch kann dies am einen und/oder anderen Ende entbehrlich sein, wenn die in der Zeichnung nicht erscheinenden, die einzelnen Leitflächen miteinander verbindenden Streben ebenfalls schallschluckend verkleidet sind, wobei diese Streben an den Enden gitterförmig in hinreichend engem Abstand voneinander angeordnet sind.

Die Distanz zwischen dem unteren Ende des Leitflächenblocks und dem Flur einerseits und zwischen dem oberen Ende des Leitflächenblocks und dem Dachrand 6 andererseits, die für die Verfahrbarkeit des Block erforderlich ist, kann in geeigneter Weise abgedichtet sein, beispielsweise durch bewegliche und/oder flexible Schürzen.

Der Anschluß des Leitflächenblocks an die Seitenwandkante 4 geschieht in solcher Weise, daß zwischen dieser Wandkante und der nächstgelegenen Leitfläche kein übermäßiger Schalldurchlaß infolge von Beugung an der Wandkante 4 stattfindet. Zum einen wird der Abstand entsprechend gering gewählt. Zum anderen kann die Wandkante 4 beugungswidrig ausgebildet, z.B. selbst ähnlich den Leitflächen 10 gekrümmt sein.

Bei den in der Zeichnung dargestellten Maßverhältnissen wird durch die Abschirmblöcke in bezug auf die Triebwerke 8 eine Verringerung des freien Bereichs der Öffnung 3 auf etwa die Hälfte bewirkt. Obwohl die Abschirmblöcke sich im Ansaugbereich der Triebwerke 8 befinden, vermeiden sie die durch Abrißwirbel an scharfen Geländekanten verursachte ungleichmäßige Anströmung der Triebwerke und verbessern sie gegenüber dem völlig freien Zustand der Öffnung 3, weil die angesaugte Luft die Abschirmblöcke nach innen parallel zur Hallenlängsrichtung verläßt. Eine Optimierung der genauen Abmessungen, der Krümmung sowie der Winkel, die die Leitflächenenden im Querschnitt zur Hallenlängsrichtung bilden, kann leicht anhand entsprechender Versuche erfolgen.

Es ist nicht erforderlich, die Abschirmblöcke symmetrisch beiderseits der Öffnung 3 vorzusehen. In manchen Fällen mag es genügen, lediglich einen einseitig angeordneten Abschirmblock anzubringen. Die Abschirmblöcke können sich über einen größeren oder kleineren Teil der Öffnungsbreite erstrecken; sie können diese auch gänzlich schließen. Es ist nicht notwendig, daß die äußeren Querschnittsränder 13 der Leitflächen genau auf 90° der Hallenlängsrichtung ausgerichtet sind; in manchen Fällen genügt vielmehr ein geringerer Umlenkungswinkel. Der Winkel zwischen der Mittellinie 14 des Leitflächenblocks und der Hallenquerrichtung kann dann auch entsprechend geringer gewählt werden. Dieser Winkel ist zweckmäßigerweise etwa halb so groß wie der Umlenkungswinkel der Leitflächen 10.

Die Verkleinerung des Abstrahlungswinkels kann auch dadurch erfolgen, daß die Seitenwände 2 der Halle öffnungsseitig durch eine Gruppe von Leitflächen 20 gemäß Fig. 3 verlängert werden. Die Leitflächen können in diesem Fall stationär angeordnet sein, weil sie die Öffnungsweite nicht verringern. Ihre Innenkanten sind fluchtend mit der zugehörigen Seitenwand 2 ausgerichtet.

Bei dieser Anordnung ist es nicht möglich, die Abschirmflächen im Horizontalschnitt an ihrem Innenrand parallel zur Hallenlängsrichtung anzuordnen. Dies ist auch in vielen Fällen nicht erforderlich. Im dargestellten Beispiel sind sie etwa in Richtung zu demjenigen Bereich innerhalb der Halle ausgerichtet, in dem ein Triebwerk 8 als Schallquelle vermutet werden kann. Die durch sie erreichte Verminderung des offenen Schallabstrahlungswinkels beläuft sich auf den Betrag des Winkels 21.

Fig. 4 zeigt ein Beispiel, in welchem die beiden der Seitenwand 2 nächsten Leitflächen 22 stationär angeordnet sind, wobei ihre Innenkanten nach innen nicht über die Flucht der Seitenwand 2 hinausragen. Die drei folgenden Leitflächen 23 sind hingegen um den Endpunkt 24 der Seitenwand 2 einzeln oder als Block schwenkbar, so daß sie einerseits eine mit durchgezogenen Linien dargestellte Stellung einnehmen können, in der sie ein wenig nach innen gezogen sind, um den Schallabstrahlungswinkel analog dem Beispiel der Fig. 1 zu verringern. Sie können aber auch in Pfeilrichtung aus der Öffnungsweite herausgeschwenkt werden und nehmen dann die strichpunktiert angegebene Stellung ein, in der sie die volle Öffnungsweite der Halle freigeben. Statt schwenkbar zu sein, können sie auch in der Art einer Jalousie zusammengeschoben werden oder in anderer Weise aus dem Öffnungsbereich entfernt werden.

Wenn eine Lärmschutzhalle in der Nähe einer Startbahn zu errichten ist, wo die zulässige Bauhöhe beschränkt ist, kann es vorkommen, daß die Bauhöhe für die Aufnahme hoher Flugzeugleitwerke nicht ausreicht. In diesem Fall kann die Lärmschutzhalle mit einem Schlitz im Firstbereich zur Aufnahme eines Flugzeugleitwerks versehen werden. Dieses läßt sich mit den erfindungsgemäßen Mitteln gleichfalls strömungstechnisch und akustisch optimieren. Zu diesem Zweck werden an dem Schlitz bewegliche Klappen vorgesehen, die - wie es oben beschrieben wurde - die Entstehung von Ablösewirbeln und den Schalldurchtritt verhindern bzw. verringern.

## Patentansprüche

1. Lärmschutzhalle mit weiter Einlaßöffnung (3) für Flugzeuge (7), die zumindest teilweise von einer Reihe beweglich angeordneter Schalldämpfungskörper verschlossen bzw. schließbar ist, deren Innenrand (12) im Horizontalschnitt in Hallenlängsrichtung verläuft, dadurch gekennzeichnet, daß die Schalldämpfungskörper von im Horizontalschnitt gekrümmten Leitflächen (10, 22, 23) gebildet sind, deren äußere Ränder (13) quer zur Längsrichtung der Halle gerichtet sind.

2. Lärmschutzhalle mit weiter, ständig offener Einlaßöffnung für Flugzeuge, dadurch gekennzeichnet, daß sie an wenigstens einem Öffnungsrand von einer Reihe von in der Verlängerung der Seitenwand (2) angeordneten Leitflächen (20, 22, 23) begrenzt ist, deren Innenrand zum Triebwerksbereich (8) der Halle und deren Außenrand quer zur Längsrichtung der Halle gerichtet ist.

3. Lärmschutzhalle nach Anspruch 1, dadurch gekennzeichnet, daß mehrere Leitflächen (10) zu einer gemeinsam bewegbaren Einheit (9) zusammengefaßt sind.

4. Lärmschutzhalle nach einem der Ansprüche 1 bis 3, dadurch gekennzeichnet, daß die Leitflächen einzeln beweglich sind.

5. Lärmschutzhalle nach einem der Ansprüche 1 bis 4, dadurch gekennzeichnet, daß die Leitflächen (20) oder einige (22) der Leitflächen fest in voller Weite der Einlaßöffnung angeordnet sind.

## Claims

1. Soundproof hangar with a wide entrance opening (3) for aircraft (7), which entrance opening is closed off, or can be closed, at least partially by a series of moveably arranged sound-damping bodies, of which the inner border (12) runs in the longitudinal direction of the hangar, in horizontal section, characterized in that the sound-damping bodies are formed by deflecting surfaces (10, 22, 23) which are curved in horizontal section and of which the outer borders (13) are directed transversely with respect to the longitudinal direction of the hangar.

2. Soundproof hangar with a wide, constantly open entrance opening for aircraft, characterized in that it is bounded, at at least one opening border, by a series of deflecting surfaces (20, 22, 23) which are arranged in extension of the side wall (2) and of which the inner border is directed toward the engine region (8) of the hangar and the outer border is directed transversely with respect to the longitudinal direction of the hangar.

3. Soundproof hangar according to Claim 1, characterized in that a plurality of deflecting surfaces (10) are combined to form a unit (9), all parts of which can be moved together.

4. Soundproof hangar according to one of Claims 1 to 3, characterized in that the deflecting surfaces can be moved individually.

5. Soundproof hangar according to one of Claims 1 to 4, characterized in that the deflecting surfaces (20) or some (22) of the deflecting surfaces are arranged fixedly in the full width of the entrance opening.

## Revendications

1. Hangar antibruit avec large ouverture d'entrée (3) pour avions (7), qui est fermé ou peut être fermé au moins partiellement par une rangée de corps amortisseurs de bruit, qui sont disposés de façon à être déplaçables, et dont le bord intérieur (12) s'étend, en coupe horizontale, dans la direction longitudinale du hangar, caractérisé en ce que les corps amortisseurs de bruit sont constitués par des surfaces de guidage (10, 22, 23) courbées en coupe horizontale, dont les bords extérieurs (13) sont orientés transversalement à la direction longitudinale du hangar.

2. Hangar antibruit avec large ouverture d'entrée, constamment ouverte, pour avions, caractérisé en ce qu'il est limité, sur au moins un bord de l'ouverture, par une rangée de surfaces de guidage (20, 22, 23) qui sont disposées dans le prolongement de la paroi latérale (2), dont le bord intérieur est orienté vers la zone des propulseurs (8) dans le hangar et dont le bord extérieur est orienté transversalement à la direction longitudinale du hangar.

3. Hangar antibruit selon la revendication 1, caractérisé en ce que plusieurs surfaces de guidage (10) sont réunies en une unité (9) déplaçable en bloc.

4. Hangar antibruit selon l'une des revendications 1 à 3, caractérisé en ce que les surfaces de guidage sont déplaçables individuellement.

5. Hangar antibruit selon l'une des revendications 1 à 4, caractérisé en ce que les surfaces de guidage (20) ou quelques unes (22) des surfaces de guidage sont disposées fixement dans la pleine largeur de l'ouverture d'entrée.
